# EUROPÄISCHE PATENTANMELDUNG

(11) **EP 0 936 364 A1**
(43) Veröffentlichungstag der Anmeldung: **18.08.1999**
(21) Anmeldenummer: 99102326.8
(22) Anmeldetag: 06.02.1999
(51) Int. Cl.: F16C 1/14

(54) **Seilkopf-Dämpfer**

(30) Priorität: 12.02.1998 DE 19805594
(71) Anmelder: Diehl Remscheid GmbH & Co., D-42857 Remscheid (DE)
(72) Erfinder: Pepping, Karl-Heinz, 53937 Gemünd (DE); Pütz, Markus, 53894 Mechernich (DE); Hausmann, Franz-Hubert, 53894 Mechernich (DE)
(74) Vertreter: Hofmann, Gerhard, Dipl.-Ing. Patentassessor

(57) **Zusammenfassung**

Ein Seilkopf-Dämpfer (1) für Schaltvorgänge an Kraftfahrzeuggetrieben ermöglicht auf einfache Weise unterschiedliche Dämpfungskennlinien (42 bis 45). Hierzu sind in einem geschlossenen Rahmen (2), an dem ein Seilzug befestigt ist ein Schlebeschlitten (15) mit einer Befestigung für das Gebtriebe und den Schiebeweg des Schiebeschlittens (15) begrenzende elastische Puffer (6) sowie Festanschläge in Form von Backen (8) vorgesehen.

## Beschreibung

Die Erfindung bezieht sich auf einen Seilkopf-Dämpfer nach dem Oberbegriff des Anspruchs 1.

Aus der DE 43 02 790 A1 ist ein Seildämpfer zur Verminderung der Körperschall- und Vibrationsübertragung bekannt. Hierzu sind in der Seilkonstruktion Einzelseile gegenüber den Befestigungspunkten des Seiles und seiner Längsachse bogenförmig ausgelenkt, so daß der Abstand der Einzelseile untereinander im Seilbauch maximal groß ist und in Richtung auf die Befestigungspunkte abnimmt. Die Einzelseile sind vollständig in ein elastisches Material einvulkanisiert und voneinander beabstandet.

Ein derartiger Seildämpfer filtert zwar einen bestimmten Schwingungsbereich aus den auftretenden Störungen, weshalb Vibrationen des Schalthebels und fühlbare Kraftspitzen am Schalthebel bei einer Getriebeschaltung trotzdem auftreten.

Kraftspitzen am Schalthebel eines Kraftfahrzeuggetriebes werden durch ein Kraftübertragungsgelenk nach der DE 38 06 522 A1 vermieden. Hierzu Weist das Kraftübertragungsgelenk einen Kulissenstein zur Ansteuerung für die Schaltmimik und getriebeseitig einen Kreuzgelenkkäfig auf. In Schubrichtung des Getriebewählhebels sind zwischen der Führung des Kulissensteins im Kreuzgelenkkäfig freie Wegstrecken und anschließende gummielastische Dämpfer vorgesehen.

Entsprechend der DE 39 32 815 C2 ist bei einer Weiterentwicklung zu dem vorgenannten Kraftübertragungsgelenk vorgesehen, daß der Kulissenstein ohne Spiel in einer Aufnahme des Kreuzgelenkkäfigs sitzt, wobei Kraftspitzen in Schubrichtung von zwei, am Kulissenstein 4 vorgesehenen Kugelabschnitten aus dämpfenden Werkstoff aufgenommen werden.

Durch die äußere Schaltung von Personenkraftwagen werden Vibrationen auf den Schalthebel übertragen, die aus dem Motor- und Getriebeblock stammen. Diese können ursächlich auf Anregungen durch Massen- und Gaskräfte des Verbrennungsmotors, Getrieberasseln und Resonanzen von Bauteilen zurückzuführen sein. Bei der äußeren Schaltung handelt es sich um die komplette Schaltmimik außerhalb des Getriebegehäuses bis einschließlich Schalthebel. Beim Schalten eines Ganges müssen zwei Funktionen übertragen werden:
1. Wählen
   Unter Wahlen versteht man das Selektieren der Gangebene erster und zweiter Gang, bzw. dritter und vierter Gang bzw. fünfter und Rückwärtsgang.
   Das Wählen muß präzise und direkt erfolgen. Weiche Kennlinien führen zu einem schwammigen Schaltgefühl.
2. Schalten
   Unter Schalten versteht man das Einlegen eines Ganges bei getretener Kupplung. Durch gezielte Federkennlinien mit Endanschlägen lassen sich Kraftspitzen, die durch die Synchranisation hervorgerufen werden, glätten.
   Zu unterscheiden sind zwei Arten von Schaltungen, nämlich Gestängeschaltung und Seilzugschaltung. Bei der Seilzugschaltung wird das Wählen und Schalten von je einem Seilzug übertragen.
   Die Seilzugschaltung hat gegenüber der Gestängeschaltung verschiedene Vorteile, wie nahezu beliebige Verlegung im Motorraum und Eigendämpfung des Systems. Dennoch treten in Verbindung mit Seilzugschaltung Probleme auf wie Seilzugrasseln, Schalthebelvibrationen und fühlbare Kraftspitzen am Schalthebel. Beim Seilzugrasseln vibriert die Kabelseele in der ebenfalls metallischen Kabelhülle des Bowdenzuges. Bei Schalthebelvibrationen kommt es in schwerwiegenden Fällen zu Sicht-, Fühl, und hörbaren Vibrationen. Selbst die nur fühlbaren Vibrationen im Schalthebel können vom Fahrer als sehr störend empfunden werden. Ebenfalls störend sind fühlbare Kraftspitzen am Schalthebel, die durch die Synchronisation hervorgerufen werden.

Der Erfindung liegt die Aufgabe zugrunde, einen Seilkopf-Dämpfer vorzuschlagen der das Seilzugrasseln, Vibrationen des Schalthebels sowie fühlbare Kraftspitzen am Schalthebel eliminiert.

Die Erfindung löst diese Aufgabe entsprechend den kennzeichnenden Merkmalen des Anspruchs 1.

Vorteilhafte Weiterbildungen der Erfindung sind den. Unteransprüchen zu entnehmen.

Wesentlich für die Erfindung ist der modulare Aufbau des Seilkopf-Dämpfers bezüglich eines Freiweges, einer progressiven Federkennlinie oder eines Endanschlages. Der Freiweg zur Abkoppelung von Vibrationen ist frei wählbar, d. h., der Freiweg kann mit oder ohne Coulombsche Reibung erfolgen. Die Belastung des Seilkopf-Dämpfers kann im Maximum auf Zug und Druck z. B. 2.000 Newton betragen. Der Seilkopf-Dämpfer kann eine stark progressive Federkennlinie aufweisen. Auch ist auf einfache Weise möglich, einen Festanschlag nach z. B. zwei Millimetern bei 500 Newton vorzusehen. Der Seilanschluß an den Seilkopf-Dämpfer erfolgt in einfacher Weise durch einen Gewindezapfen mit Innen- oder Außengewinde. Andererseits kann das Ende des Seils in einer Bohrung des Rahmens verpresst werden. Oder das Seilende wird im Werkzeug direkt mit dem Kunststoff-Käfig umspritzt.
Überraschend ist auch der geringe Bauraum des Seilkopf-Dämpfers.
Der Seilkopf-Dämpfer besteht aus einfach zu fertigenden und fehlerfrei zu montierenden Kunststoffteilen, wobei als einziges Metallteil der Gewindezapfen oder Zapfen/Bolzen zum Anschluß des Seiles vorgesehen ist.

Ein Ausführungsbeispiel der Erfindung ist in der Zeichnung dargestellt. Es zeigt:
- Fig. 1: einen Seilkopf-Dämpfer in perspektivischer Ansicht,
- Fig. 2: den Seilkopf-Dämpfer in einer Ansicht von unten,

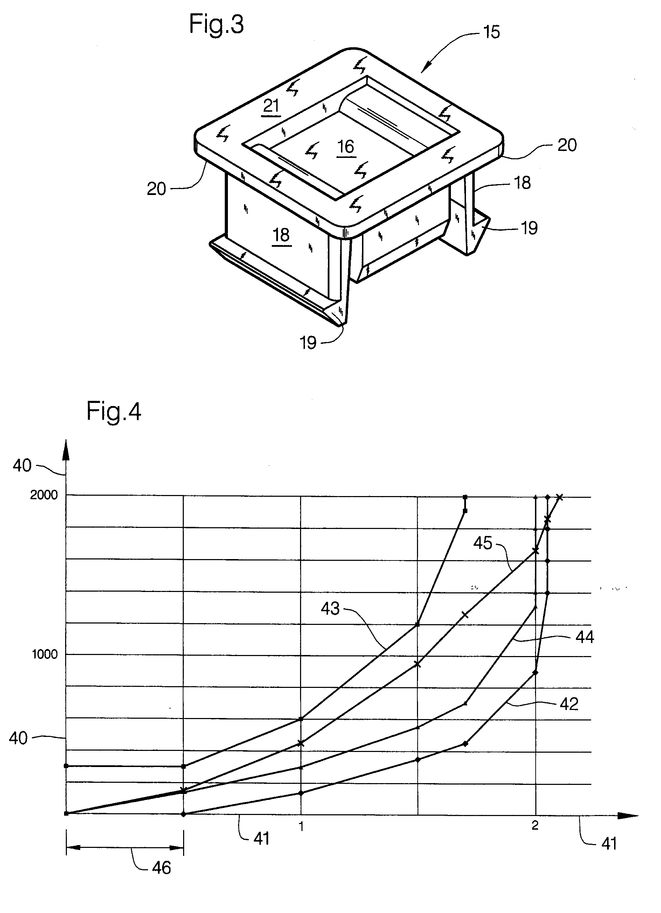

- Fig. 3: einen Schiebeschlitten nach den Fig. 1 und 2 und
- Fig. 4: ein Federkennliniendiagramm.

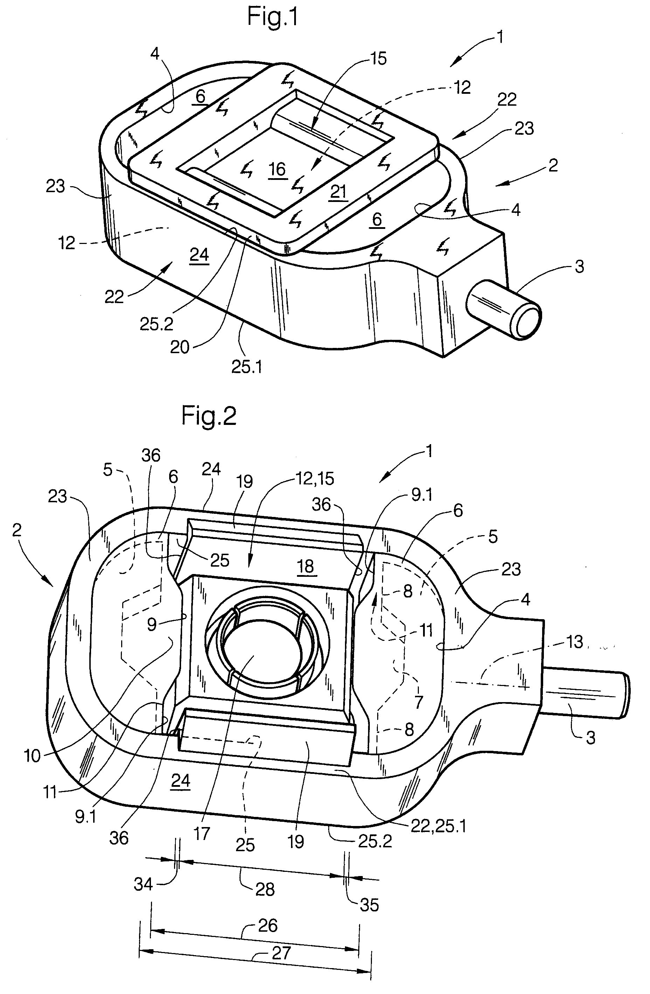

Nach den Figuren 1 und 2 besteht ein Seilkopf-Dämpfer 1 aus einem Rahmen 2 aus Kunststoff mit eingelegtem Gewindebolzen 3 aus Stahl. An den Längsenden 4 und zwar im Innenraum 12 des Rahmens 2 befinden sich angespritzte Festanschläge 5. Die mit einer konischen Ausnehmung 7 und mit seitlichen Backen 8 versehenen Festanschläge 5 tragen Gummipuffer 6. Diese können entweder aufgesteckt oder aufvulkanisiert sein. Die Ausnehmung 7 ist mit dem Gummipuffer 6 ausgefüllt.

Die Gummipuffer 6 weisen zwei unterschiedliche Funktionsbereiche 10, 11 aufgrund eines konischen, abgeflachten Nockens 9 sowie aufgrund von Seitenanschlägen 9.1 auf. Die Seitenanschläge 9.1 sind gegenüber dem Nocken 9 zurückgesetzt und liegen rechtwinklig zur Hauptachse 13. Der mittlere, vorstehende Bereich 10 mit dem Nocken 9 beschreibt die Progressivität von zu Fig. 4 beschriebenen Federkennlinien 42 bis 45.

Die seitlichen Bereiche 11 mit den Seitenanschlägen 9.1 dienen als Endpuffer.

Die Dicke der Pufferzonen der Bereiche 10 zu 11 verhalten sich wie 10 zu 1, wobei der am Puffer 6 befindliche Bereich 11 die Dicke von 1mm und der Bereich 10 die Dicke von 10mm aufweist.

Ein freier Abstand 27 zwischen den Festanschlägen 5 beträgt das 1,25-fache der Länge 28 des Schiebeschlittens 15.

Der Schiebeschlitten 15 besitzt einen etwa A-förmigen Querschnitt. Seine freien Schenkel 18 sind federnd ausgebildet. An ihren kopf- und fußseitigen Enden sind sie mit Führungsleisten 19, 20 versehen. Eine, mit den Schenkeln 18 etwa kopfseitig verbundene Kopfplatte 16 weist an ihrer Innenseite eine Kugelpfanne 17 für das nicht dargestellte Aggregat auf.
Die Schenke! 18 liegen großflächig und mit Kleiner Vorspannung an den inneren Führungsflächen 25 der Wangen 24 an, wobei jeder Schenkel 18 mit seinen Führungsleisten 19, 20 die ihm zugeordnete Wange 24 etwa U-förmig erfaßt.

Der ringförmige, geschlossene Rahmen 2 besteht aus zwei zueinander parallelen Geradführungen 22 für den Schiebeschlitten 15 und aus zwei etwa bogenförmigen Abschnitten 23. Die Geradführungen 22 sind durch gerade und gleichhohe Wangen 24 mit inneren Führungsflächen 25 entsprechend dem Abschnitt 26 gebildet.

Die bodenförmigen Abschnitte 23 des Rahmens 2 sind durch die blockartigen, als Querversteifung wirkenden Festanschläge 5 verstärkt. Damit besitzt der Rahmen 2 ein großes Widerstandsmoment bei geringem Materialaufwand und Gewicht. Bei Krafteinleitung an dem Gewindebolzen 3 oder über den Schiebeschlitten 15 ist die Formstabilität des Rahmens 2 und damit die klemmfreie Beweglichkeit des Schiebeschlittens 15 garantiert.

Die Führungsleisten 19, 20 des Schiebeschlittens 15 ragen nur geringfügig über den Rahmen 2 hinaus.

Die Ausnehmung 7 in den Festanschlägen 5 ermöglicht das weiche Einfedern des Nockens 9 und eine kurze Bauweise des Rahmens 2 und ist daher entscheidend für die weich federnde Charakteristik des Nockens 9.

Die dünne elastische Schicht auf den eben ausgebildeten Backen 8 des Festanschlages 5 ergibt in einfacher Weise einen relativ harten Endanschlag für den Schiebeschlitten 15.

Entsprechend Fig. 4 ist auf der Ordinate 40 die Kraft in Newton und auf der Abszisse 41 der Weg in mm aufgetragen.

Bei einer Kennlinie 42 liegt ein definierter Freiweg 46 entsprechend dem Seilkopf-Dämpfer 1 nach den Figuren 1 und 2 vor. Zwischen dem Schiebeschlitten 15 und dem Rahmen 2 besteht keine Reibung. Bei Krafteinleitung am Gewindebolzen 3 wird also der Rahmen 2 entsprechend dem Freiweg 34 bzw. 34 und 35 bis zum Anschlag an einem der Nocken 9 bewegt. Es erfolgt dann eine Komprimierung des Nockens 9 mit schwach ansteigender Kennlinie 42, die dann in eine stark progressive Kennlinie 42 übergeht und zwar bis zu dem starren Endanschlag an den beiden Seitenanschlägen 9`1 an den Stirnseiten 36 der Laschen 18.

Bei der Kennlinie 43 liegt ebenfalls ein definierter Freiweg 46 vor, jedoch liegt der Schiebeschlitten 15 mit Coulombscher Reibung im Rahmen 2.

Die Kennlinie 44 definiert einen Seilkopf-Dämpfer ohne Freiweg mit stark progressiver Kennlinie 44.

Ein Seilkopf-Dämpfer ohne Freiweg mit schwach progressiver Kennlinie 45 liegt entsprechend der Kennlinie 45 vor. Hierbei ist der Nocken 9 mit einer relativ weichen Dämpfungscharakteristik ausgestattet.

## Patentansprüche

1. Seilkopf-Dämpfer für Schaltvorgänge von Aggregaten, wie Getrieben, Kupplungen, Geräten bei Maschinen, Kraftfahrzeugen mittels Seilen, wobei zwischen einem Aggregat und dem Seil ein Dämpfer vorgesehen ist,
dadurch gekennzeichnet,
daß der Dämpfer (1) aus einem etwa ringförmigen, geschlossenen Rahmen (2) mit einem darauf bewegbar gelagerten Schiebeschlitten (15) besteht,
der Weg des Schiebeschlittens (15) beidseitig durch rahmenseitige oder schlittenseitige, elastische Puffer (6) begrenzt ist und eine Befestigung (17) für ein Aggregat aufweist,
der Rahmen (2) mit wenigstens einer Geradführung (22) für den Schlebeschlitten (15) versehen ist, und
der Rahmen (2) wenigstens eine Befestigung (3) für das Seil aufweist.

2. Seilkopf-Dämpfer nach Anspruch 1,
dadurch gekennzeichnet,
daß der Rahmen (2) aus zwei, zueinander parallel liegenden Wangen (24) mit Geradführungen (22) und aus zwei daran anschließenden Bogenabschnitten (23) besteht, wobei der Rahmen (2) flachscheibenförmig ausgebildet ist und im Bereich der Wangen (24) Führungsflächen (25, 25.1, 25.2) für den Schlebeschlitten (15) aufweist.

3. Seilkopf-Dämpfer nach Anspruch 2,
dadurch gekennzeichnet,
daß der Rahmen (2) in seinem Innenraum (12) und zwar an den Bogenabschnitten (23) zwei in einem Abstand (27) liegende Festanschläge (5) aufweist und deren Abstand (27) größer ist, als die Länge (28) des Schiebeschlittens (15).

4. Seilkopf-Dämpfer nach Anspruch 3,
dadurch gekennzeichnet,
daß die Festanschläge (5) elastische Puffer (6) tragen,
die Puffer (6) zwei Funktionsbereiche (10, 11) aufweisen, nämlich einen mittleren, vorstehenden, weichen Funktionsbereich (10) und demgegenüber zurück gesetzte, seitliche, harte Bereich (11), und
die Dicke der Funktionsbereiche (10, 11) der Puffer (6) sich etwa wie 10 zu 1 verhalten.

5. Seilkopf-Dämpfer nach Anspruch 3,
dadurch gekennzeichnet,
daß die Festanschläge (5) im mittleren Funktionsbereich (10) eine großvolumige Ausnehmung (7) aufweisen, wobei diese Ausnehmung (7) etwa spiegelbildlich zu einem konischen Nocken (9) des Puffers (6) liegt.

6. Seilkopf-Dämpfer nach Anspruch 1,
dadurch gekennzeichnet
daß die Befestigung für das Aggregat als Kugelpfanne (17) ausgebildet ist und im Innenraum (12) des Rahmens (1) liegt,
während die Befestigung für das Seil durch einen, an wenigstens einer Stirnseite des Rahmens (2) angeordneten Gewindebolzen (3) erfolgt.

7. Seilkopf-Dämpfer nach Anspruch 1,
dadurch gekennzeichnet,
daß der Rahmen (2) den Schiebeschlitten (15) in seinem Innenraum (12) einklipsbar aufnimmt,
der Schlebeschlitten (15) einen etwa A-förmigen Querschnitt besitzt,
wobei die freien Schenkel (18) federnd ausgebildet und an ihren kopf- und fußseitigen Enden mit Führungsleisten (19, 20) versehen sind,
und eine, mit den Schenkeln (18) etwa kopfseitig verbundene Kopfplatte (16) die Befestigung (17) für das Aggregat aufweist.

8. Seilkopf-Dämpfer nach Anspruch 7,
dadurch gekennzeichnet,
daß die Schenkel (18) großflächig und mit Kleiner Vorspannung an den inneren Führungsflächen (25) der Wangen (24) anliegen, und
jeder Schenkel (18) mit seinen Führungsleisten (19, 20) die ihm zugeordnete Wange (24) etwa U-förmig erfaßt.

9. Seilkopf-Dämpfer nach Anspruch 1,
dadurch gekennzeichnet,
daß der Schiebeschlitten (15) aus einem Kunststoffbesteht, und
die Puffer (6) auf die Festanschläge (5) aufsteckbar oder mit diesen fest verbunden sind und der Rahmen (2) aus einem Kunststoff oder einem metallischen Werkstoff besteht.

10. Seilkopf-Dämpfer nach Anspruch 1,
dadurch gekennzeichnet,
daß der Abstand zwischen den Puffern (6) gleich oder größer oder kleiner ist als die Länge (28) des Schlittens (15).

11. Seilkopf-Dämpfer nach Anspruch 1,
dadurch gekennzeichnet,
daß die elastischen Puffer am Schlebeschlitten befestigt sind.

12. Seilkopf-Dämpfer nach Anspruch 1,
dadurch gekennzeichnet,
daß das Seil/Bolzen direkt im Rahmen verstemmt oder eingegossen ist.
